# EUROPEAN PATENT SPECIFICATION

(11) **EP 4 238 848 B1**
(45) Date of publication and mention of the grant of the patent: **18.12.2024**
(21) Application number: 23159966.3
(22) Date of filing: 03.03.2023
(51) Int. Cl.: B61G 5/10, G01M 17/08

(54) **SYSTEM TO SIMULATE THE WORK CONDITIONS OF THE CONNECTION CABLES BETWEEN TWO FOLLOWING CARS OF A RAILWAY RAKE**
SYSTEM ZUR SIMULATION DER ARBEITSBEDINGUNGEN DER VERBINDUNGSKABEL ZWISCHEN ZWEI FOLGENDEN WAGEN EINES EISENBAHNRECHENS
SYSTÈME POUR SIMULER LES CONDITIONS DE TRAVAIL DES CÂBLES DE CONNEXION ENTRE DEUX WAGONS SUCCESSIFS D'UN RATEAU DE CHEMIN DE FER

(30) Priority: 04.03.2022 IT 202200004178
(43) Date of publication of application: 06.09.2023
(73) Proprietor: Tecnikabel S.p.A., 10121 Torino (IT)
(72) Inventor: CLERICI, Diego, 10121 Torino (IT); MILANESIO, Riccardo, 10121 Torino (IT); TOSO, Stefano, 10121 Torino (IT)
(74) Representative: Studio Torta S.p.A.

(56) References cited:
- CN-A- 112 666 015
- DE-A1- 102007 020 430
- DE-C1- 4 400 520
- SU-A1- 1 173 232

## Description

### RELATED APPLICATIONS

This patent application claims priority from Italian patent application no. 102022000004178 filed on March 04, 2022.

### TECHNICAL FIELD

The present invention relates to a system to simulate the work conditions of the connection cables between two following cars of a railway rake.

### PRIOR ART

As known, a railway rake is provided with a plurality of cars (typically comprising a locomotive and a control car) which are connected to one another also by a cabling system.

The cabling system comprises in turn a plurality of fixed cables housed on the cars and a plurality of cables designed to provide the connection between two following cars by the coupling of a plurality of connectors and counter-connectors. Typically, the connection cables are suspended between two following cars. When in use, the cars are subjected to significant both mechanical and thermal stresses and to different types of reciprocal motion which depend, for example, on the type of operation in progress (including running on a straight track, entering a corner, and manoeuvres carried out in the yard); consequently, also the suspended cables designed to provide the connection between two following cars are subjected to repeated thermal and mechanical stresses (in particular due to bending and torsion). A system to simulate the work condition of the connection cables between two following cars of a railway rake is known from DE 10 2007 020430 A1.

For the purposes of safety, it is therefore of fundamental importance to be able to simulate the work conditions of the connection cables of two following cars and, in particular, reproduce the stresses to which they are subjected during the ordinary operations of a railway rake.

For this purpose, a simulation system has been proposed designed to reproduce the mechanical stresses to which the connection cables are subjected which comprises a frame having a first rod, at a first upper end of which a first connector-holder element is connected for a first pair of connectors and/or counter-connectors, and a second rod, at an upper end of which a second connector-holder element is connected for a second pair of connectors and/or counter-connectors which are arranged, during the simulation, facing the first pair of connectors and/or counter-connectors.

In a set-up and adjusting phase prior to the actual simulation phase, the two connector-holder elements are arranged at a certain distance from each other so as to simulate the distance between two following cars of a given model of railway rake.

During the actual simulation phase, on the other hand, the two connector-holder elements move in two directions substantially orthogonal to each other by means of respective drives, preferably of pneumatic type.

DE102007020430 describes a simulation system that simulates the work conditions of the connection cables between two following cars of known type.

However, the simulation systems of known type have some drawbacks, in particular they are not able to replicate all the mechanical and thermal stresses to which the connection cables are subjected in normal work conditions.

### DISCLOSURE OF THE INVENTION

The object of the present invention is therefore to provide a simulation system to simulate the work conditions of the connection cables between two following cars of a railway rake, which is free from the drawbacks described above, allows replication of all the mechanical and thermal stresses to which the connection cables are subjected in normal work conditions and, in particular, is easy and inexpensive to produce.

According to the present invention a simulation system is provided to simulate the work conditions of the connection cables between two following cars of a railway rake as claimed in the attached claims.

### BRIEF DESCRIPTION OF THE DRAWINGS

The present invention will now be described with reference to the attached drawings, which illustrate a non-limiting embodiment example thereof, in which:
- figure 1 is a schematic view of a railway rake;
- figure 2 is a perspective view in side elevation of a simulation system to simulate the work conditions of the connection cables between two following cars of the railway rake of figure 1 realized in accordance with the present invention;
- figure 3 is a perspective view of a movable assembly of the simulation system of figure 2 with parts removed for clarity;
- figure 4 is a perspective view of a detail of figure 3;
- figure 5 is a further perspective view of the movable assembly of the simulation system of figure 2; and
- figures 6 and 7 are two perspective views of a fixed assembly of the simulation system of figure 2.

### PREFERRED EMBODIMENTS OF THE INVENTION

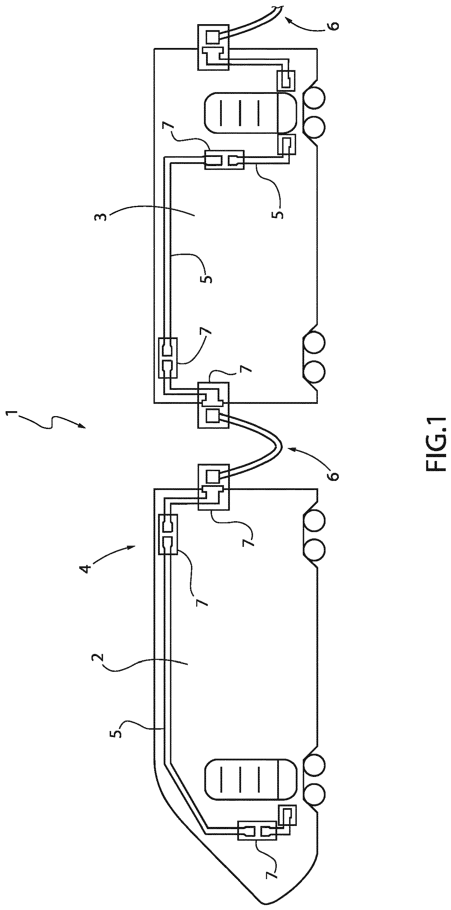

In figure 1, the number 1 indicates overall a railway rake 1 having a plurality of cars 3 (typically comprising at least one locomotive 2 and a control car) which are connected to one another also by means of a cabling system 4.

The cabling system 4 comprises in turn a plurality of fixed cables 5 housed on the cars 3 and a plurality of cables 6 designed to provide the connection between two following cars 2, 3 via the coupling of a plurality of connectors 7 and counter-connectors. Typically, the connection cables 6 are suspended between two following cars 2, 3.

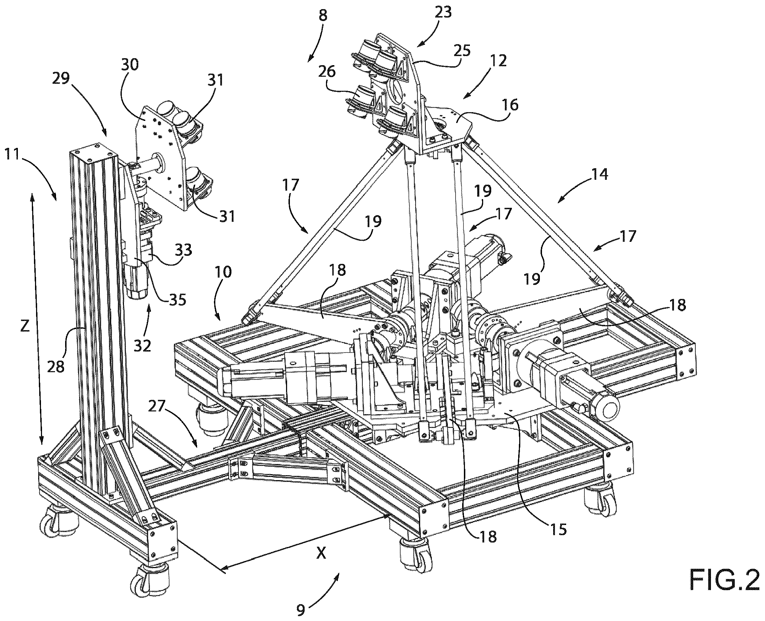

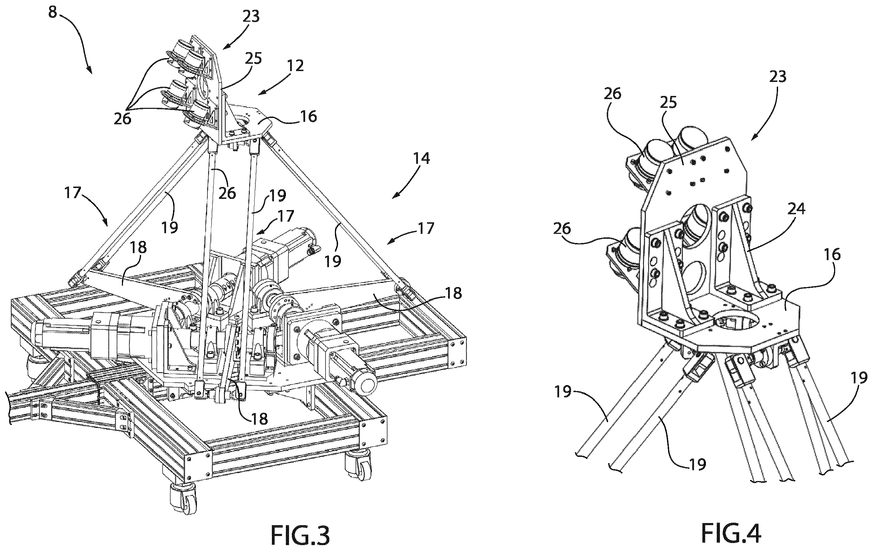

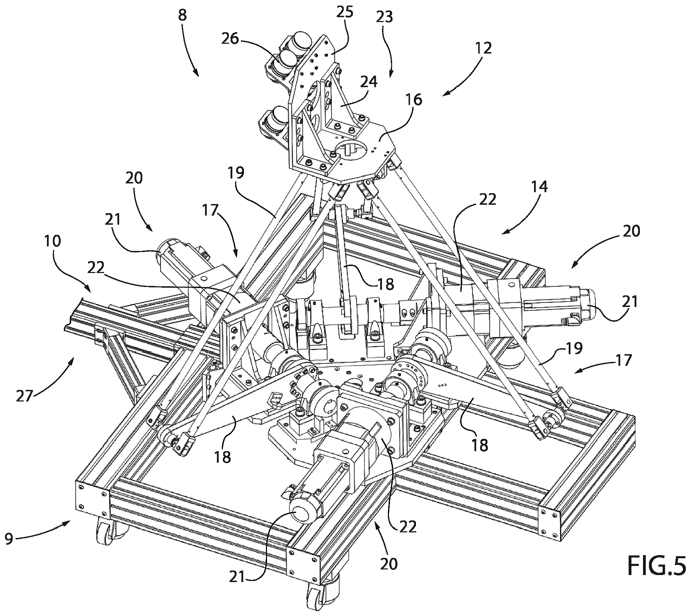

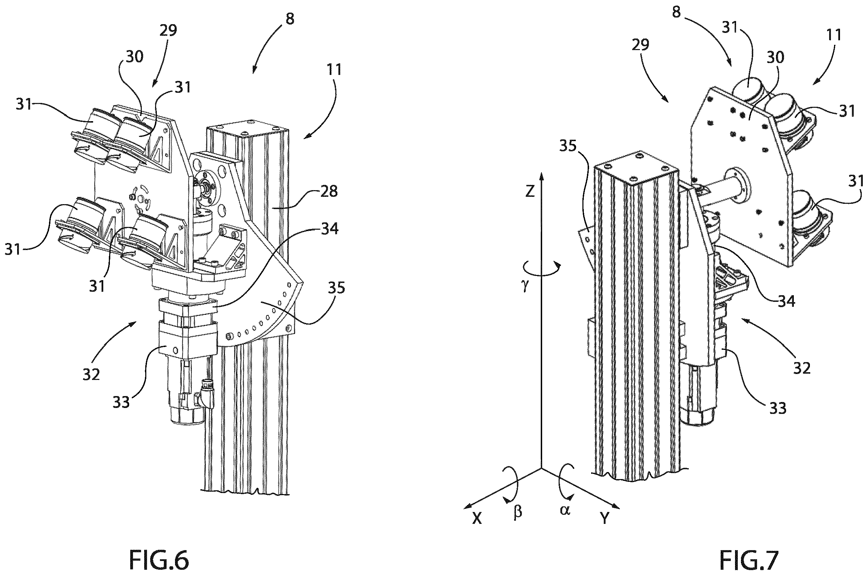

In figures 2 to 7, the number 8 indicates overall a simulation system designed to reproduce the mechanical and thermal stresses to which the connection cables 6 are subjected in work conditions.

The simulation system 8 comprises a test structure 9 having a supporting frame 10 for a fixed assembly 11 and a movable assembly 12.

According to a preferred variation, the test structure 9 (namely both the fixed assembly 11 and the movable assembly 12) is housed in a climatic chamber (not illustrated) designed to keep the operating temperature constant at a value comprised between - 40°C and +90°C.

The movable assembly 12 is made to simulate/reproduce the axial movements to which the connection cables 6 are subjected in work conditions; while the fixed assembly 11 is designed to simulate/reproduce the rotations to which the connection cables 6 are subjected in work conditions.

In further detail, the movable assembly 12 comprises an inverted delta robot 14. The delta robot 14 comprises a fixed base 15 connected to the supporting frame 10 and a movable platform 16, which is connected to the fixed base 15 by means of three connection arms 17. Each connection arm 17 is provided by means of a crank 18 connected to a respective articulated parallelogram 19.

The movable platform 16 is designed so as to perform movements while always remaining parallel to the fixed base 15. In other words, the movable platform 16 is able to translate along the three axes X, Y and Z, but it is not able to rotate around the above-mentioned axes X, Y and Z.

The movable platform 16 places itself, in use, at a maximum distance from the fixed base 15 comprised between +750 mm and +1350 mm (calculated relative to the plane defined by the fixed base 15); preferably, the movable platform 16 places itself, in use, at a maximum distance of +835 mm from the fixed base 15.

The delta robot 14 is made so as to allow the movable platform 16 at least the following movements:
- shifts along the axis X comprised between -800 and +700 mm;
- shifts along the axis Y comprised between -700 and +700 mm;
- shifts along the axis Z comprised between +750 and +1510 mm (although significant shifts along the axis X and along the axis Y are possible up to shifts along the axis Z of +1350mm).

The work space in which the delta robot 14 moves (and in particular the movable platform 16) is defined by a plurality of substantially concentric surfaces, the size of which decreases as the distance from the fixed base 15 increases. In particular, the surfaces covered by the movable platform 16 are substantially concentric trianguloids gradually increasing in size as they get nearer the fixed base 15. If the shifts along the axis Z are below +750 mm, the surfaces covered by the movable platform 16 take substantially the form of three-pointed stars gradually decreasing in size as they get nearer the fixed base 15.

During the actual simulation phase, the platform 16 can move within a volume defined by the plurality of substantially concentric surfaces, the size of which decreases as the distance from the fixed base 15 increases.

Furthermore, the delta robot 14 comprises a number of actuator devices 20 for driving the movements of the connection arms 17. In particular, the delta robot 14 comprises an actuator device 20 for each connection arm 17 comprising in turn an operating motor 21, preferably of brushless type, each of which is connected to a respective crank 18, preferably with the interposition of a respective reduction gear 22. According to a preferred embodiment, braking devices are provided (not illustrated) for locking the cranks 18 in the absence of power from the respective operating motors 21. The operating motors 21 and the respective reduction gears 22 are housed on the fixed base 15.

To the movable platform 16 is rigidly connected a supporting element 23 defined by at least a bracket 24 to which a connector-holder plate 25 is connected, on a surface of the latter, facing the fixed assembly 11, a number of connectors 26 and/or counter-connectors are arranged.

According to a preferred variation, up to four connectors 26 and/or counter-connectors are arranged on the connector-holder plate. According to a preferred embodiment, supports are provided for the connectors 26 and/or counter-connectors connected to the connector-holder plate 25 and interchangeable so as to adapt to different types of connectors 26 and/or counter-connectors.

The supporting frame 10 comprises a telescopic structure 27 to allow sliding of the fixed assembly 11 relative to the movable assembly 12. In a set-up and adjusting phase preliminary to the actual simulation phase, the fixed assembly 11 is made to slide along the axis X until it places itself at a given distance from the movable assembly 12 so as to simulate the desired distance between two following cars 3 of a given model of railway rake 1. In other words, it is possible to move the fixed assembly 11 closer to/away from the movable assembly 12 to arrange them at the desired distance and so as to replicate the distance between two following cars 3 of a given model of railway rake 1.

According to an embodiment not illustrated, the telescopic structure 27 allows sliding of the fixed assembly 11 also along the Y axis.

According to an embodiment not illustrated, the supporting frame 10 comprises a track orthogonal to the telescopic structure 27 on which the fixed assembly 11 is free to slide. The two linear guides are connected, at the ends thereof, to two head elements, designed to act as stroke ends for the fixed assembly 11.

In a set-up and adjusting phase preliminary to the simulation phase, the fixed assembly 11 slides along the tracks along the axis Y as far as a predefined given position so as to simulate a possible misalignment in installation of the connectors 31 and/or counter-connectors between two following cars 3 of a given model of railway rake 1. Members (not illustrated) are also provided to lock the fixed assembly 11 in the desired position.

The fixed assembly 11 comprises a rod 28 at an upper end of which a supporting element 29 is connected defined by a connector-holder plate 30 facing the movable assembly 12 and on a surface of which a number of connectors 31 and/or counter-connectors are arranged. According to a preferred variation, up to four connectors 31 and/or counter-connectors are arranged on the connector-holder plate 30. Clearly, on the connector-holder plate 30 the same number of connectors 31 and/or counter-connectors are arranged as on the connector-holder plate 25.

During the simulation phase, the connectors 31 and/or counter-connectors face the connectors 26 and/or counter-connectors and are connected to one another by means of the respective connection cables 6 to be tested. The supporting element 29 is movable along the axis Z. In other words, the supporting element 29 is free to slide along the rod 28.

In a set-up and adjusting phase preliminary to the actual simulation phase, the supporting element 29 is made to slide along the axis Z until it is arranged at a given distance from the ground so as to simulate the desired height for the connection cables 6 to be tested. The fixed assembly 11 comprises a member (not illustrated) designed to lock the supporting element 29 at the desired height.

The fixed assembly 11 comprises an actuator device 32 defined by an operating motor 33, preferably of brushless type, connected to the connector-holder plate 30, preferably with the interposition of a respective reduction gear 34. According to a preferred embodiment, braking devices (not illustrated) are provided to lock the connector-holder plate 30 in the absence of power from the operating motor 33. The operating motor 33 is designed to impart to the connector-holder plate 30 a rotation around the axis Z. In particular, the connector-holder plate 30 can cover around the axis Z angles γ having amplitude comprised between -45° and +45°.

The operating motor 33 is connected to a drilled "protractor" plate 35 rotating around the axis X. In particular, the plate 35 is made so as to define with the axis X an angle β having amplitude comprised between 0° and +45°.

According to a preferred variation, in a set-up and adjusting phase preliminary to the actual simulation phase, an initial angle βi is defined and the plate 35 (and, consequently, the operating motor 33) is locked by means of a locking device (not illustrated) in the position that allows said initial angle βi to be defined.

Furthermore, according to a first variation, the fixed assembly comprises a joint member (not illustrated) that allows rotation of the connector-holder plate 30 around an axis Y. In particular, the connector-holder plate 30 defines with the axis Y an angle α having amplitude comprised between 0° and +11°.

According to a preferred variation, in a set-up and adjusting phase preliminary to the simulation phase, an initial angle α is defined and the connector-holder plate 30 is locked by means of a locking device (not illustrated) in the position that allows said initial angle α to be defined.

According to a further variation, the fixed assembly comprises sheet-like shims (not illustrated) interposed between the rod 28 and the plate 35 which allow rotation of the connector-holder plate 30 around an axis Y. In further detail, the sheet-like shims have a non-uniform thickness; in other words, the sheet-like shims have a substantially V-shaped form. The connector-holder plate 30 defines with the axis Y an angle αᵢ having amplitude comprised between 0° and +11°. In further detail, in a set-up and adjusting phase preliminary to the simulation phase, an initial angle α is defined and the connector-holder plate 30 is locked by means of the sheet-like shims in the position that allows said initial angle α to be defined.

During the actual simulation phase, the actual angle covered by the connector-holder plate 30 is represented by the trigonometric composition of the three angles αᵢ, βᵢ, γ.

The simulation system 8 further comprises a control unit which, for each simulation, is adapted to define the trajectory of the movable plate 16 in the work volume, adjust the speed of the movements (expressed in terms of work cycles per minute), establish the amplitude of the initial angle α and the initial angle β in which to lock the fixed assembly 11 and establish the amplitude of the angle γ covered during the actual simulation phase. Furthermore, according to a preferred variation, it is possible to save in a memory of the control unit different test sequences repeatable over time.

The advantages of the simulation system 8 are clear from the preceding description. In particular, the simulation system 8 allows replication of all the mechanical and thermal stresses to which the connection cables 6 are subjected in normal work conditions and is able to easily adapt to any type of railway rake 1.

## Claims

1. A system (8) to simulate the work condition of the connection cables (6) between two following cars (2, 3) of a railway rake (1) comprising a first assembly (12) and a second assembly (11), **characterised in that**:
- the first assembly (12) is designed to reproduce the axial movements to which the connection cables (6) are subjected in use and comprises, in turn:
- a delta robot (14) having a fixed base (15) and a movable platform (16), which makes translations along three axes (X, Y, Z) orthogonal to one another and is connected to the fixed base (15) by means of three arms (17); and
- a first support element (23), which is rigidly connected to the movable platform (16) and has a first connector-holder plate (25), which carries, on a surface of its, a number of first connectors (26) and/or counter-connectors; and
- the second assembly (11) is designed to reproduce the rotations to which the connection cables (6) are subjected in use and comprises a rod (28) connected, at an upper end of its, to a second support element (29) having a second connector-holder plate (30), which carries, on a surface of its, a number of second connectors (31) and/or counter-connectors facing, during the simulation phase, the first connectors (26) and/or counter-connectors; and wherein the second connector-holder plate (30) can rotate around the three orthogonal axes (X, Y, Z) .

2. - The system according to claim 1, wherein the actual angle covered by the connector-holder plate (30) is obtained from the trigonometric composition of three angles (αᵢ, ηᵢ, γ) defined with the three orthogonal axes (X, Y, Z), respectively.

3. **-** The system according to claim 1 or 2, wherein each arm (17) is obtained by means of a crank (18) connected to a respective articulated parallelogram (19).

4. - The system according to claim 3, wherein the delta robot (14) comprises a first actuator device (20) for each connection arm (17) comprising, in turn, a first operating motor (21), preferably a brushless motor; each first motor (21) is connected to the respective crank (18), preferably with the interposition of a respective first reduction gear (22).

5. **-** The system according to claim 4 and comprising braking devices to block each crank (18), when in absence of power from the first respective operating motor (21).

6. **-** The system according to any one of the preceding claims, wherein said platform (16) is movable within a volume defined by a plurality of substantially concentric surfaces, whose size decreases as the distance from the fixed base (15) increases.

7. **-** The system according to any one of the preceding claims, wherein the second assembly (11) comprises a second actuator device (32) defined by a second operating motor (33), preferably a brushless motor, which is connected to the second connector-holder plate (30), preferably with the interposition of a respective second reduction gear (34); the second operating motor (33) is designed to cause the second connector-holder plate (30) to make a rotation around a first axis (Z).

8. **-** The system according to claim 7 and comprising a braking device to block the second connector-holder plate (30), when in absence of power from the respective second operating motor (33) .

9. **-** The system according to claim 7 or 8, wherein the second connector-holder plate (30) covers, during the simulation phase, angles ranging from - 45° to + 45° around the first axis (Z).

10. **-** The system according to claim 7 or 8 or 9, wherein the second actuator device (32) is connected to a plate (35), which can rotate around a second axis (X); in particular, said plate (35) defines, with the second axis (X), a first angle (β) ranging from 0° to + 45°.

11. **-** The system according to any one of the claims from 7 to 10, wherein the second connector-holder plate (30) can rotate around a third axis (Y); in particular, the second connector-holder plate (30) defines, with the third axis (Y), a second angle ranging from 0° to + 11°.

12. **-** The system according to claim 11, wherein the second assembly (11) comprises a joint member or sheet-like shims with a non-uniform thickness interposed between the rod (28) and the plate (35), which allow the connector-holder plate (30) to be locked so as to define, with the third axis (Y), a given angle (α) .

13. **-** The system according to any one of the preceding claims, wherein the second support element (29) slides along the rod (28) so as to place itself at a given distance from the ground and comprises a member suited to lock it at the desired height.

14. **-** The system according to any one of the preceding claims, wherein the second assembly (11) is free to slide relative to the first assembly (12) so as to simulate the desired distance between two following cars (3) of a given model of railway rake (1).

15. - The system according to any one of the preceding claims and comprising a frame (10) having a telescopic structure (27) so as to allow the second assembly (11) to slide relative to the first assembly (12) along a first axis (X) or along a second axis (Y), orthogonal to the first axis (X).

16. **-** The system according to any one of the preceding claims, wherein both the second assembly (11) and the first assembly (12) are housed inside a climatic chamber designed to keep the temperature at a value ranging from - 40°C to + 90°C.

17. **-** The system according to any one of the preceding claims, wherein each connector-holder plate (25, 30) carries up to four connectors (26, 31).

18. - The system according to any one of the preceding claims and comprising a control unit that, for each simulation, is aimed at defining the trajectory of the mobile platform (16) in the operating volume, controlling the speed of movements (i.e. operating cycles per minute), determining the initial amplitude of a first angle (β) and of a second angle (α) to block the second assembly (11) to establish the amplitude of a third angle (γ) covered during the simulation.

## Patentansprüche

1. System (8) zum Simulieren des Arbeitszustandes der Anschlusskabel (6) zwischen zwei nachfolgenden Wagen (2, 3) eines Eisenbahnschwaders (1), das eine erste Baugruppe (12) und eine zweite Baugruppe (11) umfasst, **dadurch gekennzeichnet, dass**:
- die erste Baugruppe (12) so ausgelegt ist, dass sie die axialen Bewegungen reproduziert, denen die Anschlusskabel (6) im Gebrauch ausgesetzt sind, und wiederum umfasst:
- einen Deltaroboter (14) mit einer festen Basis (15) und einer beweglichen Plattform (16), die Translationen entlang dreier zueinander orthogonaler Achsen (X, Y, Z) ausführt und mittels dreier Arme (17) mit der festen Basis (15) verbunden ist; und
- ein erstes Trägerelement (23), das starr mit der beweglichen Plattform (16) verbunden ist und eine erste Verbinderhalterplatte (25) aufweist, die auf einer ihrer Oberflächen eine Anzahl von ersten Verbindern (26) und/oder Gegenverbindern trägt; und
- die zweite Baugruppe (11) so ausgelegt ist, dass sie die Drehungen reproduziert, denen die Anschlusskabel (6) im Gebrauch ausgesetzt sind, und eine Stange (28) umfasst, die an einem ihrer oberen Enden mit einem zweiten Trägerelement (29) verbunden ist, das eine zweite Verbinderhalterplatte (30) aufweist, die auf einer ihrer Oberflächen eine Anzahl von zweiten Verbindern (31) und/oder Gegenverbindern trägt, die während der Simulationsphase den ersten Verbindern (26) und/oder Gegenverbindern zugewandt sind; und wobei die zweite Verbinderhalterplatte (30) um die drei orthogonalen Achsen (X, Y, Z) drehen kann.

2. System nach Anspruch 1, wobei der tatsächliche Winkel, der von der Verbinderhalterplatte (30) abgedeckt wird, aus der trigonometrischen Zusammensetzung dreier Winkel (αᵢ, ηᵢ, γ) erhalten wird, die jeweils durch die drei orthogonalen Achsen (X, Y, Z) definiert sind.

3. System nach Anspruch 1 oder 2, wobei jeder Arm (17) mittels einer Kurbel (18) erhalten wird, die mit einem jeweiligen Gelenkparallelogramm (19) verbunden ist.

4. System nach Anspruch 3, wobei der Deltaroboter (14) eine erste Aktuatorvorrichtung (20) für jeden Verbindungsarm (17) umfasst, die wiederum einen ersten Betriebsmotor (21), vorzugsweise einen bürstenlosen Motor, umfasst; jeder erste Motor (21) ist mit der jeweiligen Kurbel (18) verbunden, vorzugsweise unter Zwischenschaltung eines jeweiligen ersten Untersetzungsgetriebes (22).

5. System nach Anspruch 4 und umfassend Bremsvorrichtungen, um jede Kurbel (18) zu blockieren, wenn keine Leistung vom ersten jeweiligen Betriebsmotor (21) vorhanden ist.

6. System nach einem der vorhergehenden Ansprüche, wobei die Plattform (16) innerhalb eines Volumens beweglich ist, das durch eine Vielzahl von im Wesentlichen konzentrischen Oberflächen definiert ist, deren Größe mit zunehmendem Abstand von der festen Basis (15) abnimmt.

7. System nach einem der vorhergehenden Ansprüche, wobei die zweite Baugruppe (11) eine zweite Aktuatorvorrichtung (32) umfasst, die durch einen zweiten Betriebsmotor (33), vorzugsweise einen bürstenlosen Motor, definiert ist, der mit der zweiten Verbinderhalterplatte (30) verbunden ist, vorzugsweise unter Zwischenschaltung eines jeweiligen zweiten Untersetzungsgetriebes (34); der zweite Betriebsmotor (33) ist so ausgelegt, dass er die zweite Verbinderhalterplatte (30) veranlasst, eine Drehung um eine erste Achse (Z) auszuführen.

8. System nach Anspruch 7 und umfassend eine Bremsvorrichtung, um die zweite Verbinderhalterplatte (30) zu blockieren, wenn keine Leistung vom jeweiligen zweiten Betriebsmotor (33) vorhanden ist.

9. System nach Anspruch 7 oder 8, wobei die zweite Verbinderhalterplatte (30) während der Simulationsphase Winkel im Bereich von -45° bis +45° um die erste Achse (Z) abdeckt.

10. System nach Anspruch 7 oder 8 oder 9, wobei die zweite Aktuatorvorrichtung (32) mit einer Platte (35) verbunden ist, die um eine zweite Achse (X) drehen kann; insbesondere definiert die Platte (35) mit der zweiten Achse (X) einen ersten Winkel (β) im Bereich von 0° bis +45°.

11. System nach einem der Ansprüche 7 bis 10, wobei sich die zweite Verbinderhalterplatte (30) um eine dritte Achse (Y) drehen kann; insbesondere definiert die zweite Verbinderhalterplatte (30) mit der dritten Achse (Y) einen zweiten Winkel im Bereich von 0° bis +11°.

12. System nach Anspruch 11, wobei die zweite Baugruppe (11) ein zwischen der Stange (28) und der Platte (35) eingefügte/s Verbindungsglied oder blattförmige Unterlegscheiben mit einer ungleichmäßigen Dicke umfasst, die es ermöglichen, die Verbinderhalterplatte (30) so zu verriegeln, dass sie mit der dritten Achse (Y) einen bestimmten Winkel (α) definiert.

13. System nach einem der vorhergehenden Ansprüche, wobei das zweite Trägerelement (29) entlang der Stange (28) gleitet, um sich in einem bestimmten Abstand vom Boden zu positionieren, und ein Glied umfasst, das geeignet ist, es in der gewünschten Höhe zu verriegeln.

14. System nach einem der vorhergehenden Ansprüche, wobei die zweite Baugruppe (11) relativ zur ersten Baugruppe (12) frei gleiten kann, um den gewünschten Abstand zwischen zwei nachfolgenden Wagen (3) eines bestimmten Modells eines Eisenbahnschwaders (1) zu simulieren.

15. System nach einem der vorhergehenden Ansprüche und umfassend einen Rahmen (10) mit einer teleskopischen Struktur (27), die es der zweiten Baugruppe (11) ermöglicht, relativ zur ersten Baugruppe (12) entlang einer ersten Achse (X) oder entlang einer zweiten Achse (Y), die orthogonal zur ersten Achse (X) verläuft, zu gleiten.

16. System nach einem der vorhergehenden Ansprüche, wobei sowohl die zweite Baugruppe (11) als auch die erste Baugruppe (12) in einer Klimakammer untergebracht sind, die dazu ausgelegt ist, die Temperatur auf einem Wert im Bereich von -40 °C bis +90 °C zu halten.

17. System nach einem der vorhergehenden Ansprüche, wobei jede Verbinderhalterplatte (25, 30) bis zu vier Verbinder (26, 31) trägt.

18. System nach einem der vorhergehenden Ansprüche und umfassend eine Steuereinheit, die für jede Simulation darauf abzielt, die Trajektorie der beweglichen Plattform (16) in dem Betriebsvolumen zu definieren, die Geschwindigkeit von Bewegungen (d. h. Betriebszyklen pro Minute) zu steuern, die Anfangsamplitude eines ersten Winkels (β) und eines zweiten Winkels (α) zu bestimmen, um die zweite Baugruppe (11) zu blockieren, um die Amplitude eines dritten Winkels (γ) festzulegen, der während der Simulation abgedeckt wird.

## Revendications

1. Système (8) pour simuler l'état de fonctionnement des câbles de connexion (6) entre deux wagons (2, 3) successifs d'une rame ferroviaire (1) comprenant un premier ensemble (12) et un deuxième ensemble (11), **caractérisé en ce que** :
- le premier ensemble (12) est conçu pour reproduire les déplacements axiaux auxquels sont soumis les câbles de connexion (6) lors de l'utilisation et comprend, à son tour :
- un robot delta (14) ayant une base fixe (15) et une plate-forme mobile (16), qui effectue des translations le long de trois axes (X, Y, Z) orthogonaux entre eux et qui est connecté à la base fixe (15) au moyen de trois bras (17) ; et
- un premier élément de support (23), qui est rigidement connecté à la plate-forme mobile (16) et a une première plaque de maintien de connecteurs de connecteurs (25), qui porte, sur une de ses surfaces, un certain nombre de premiers connecteurs (26) et/ou de contre-connecteurs ; et
- le deuxième ensemble (11) est conçu pour reproduire les rotations auxquelles sont soumis les câbles de connexion (6) en utilisation et comprend une tige (28) connectée, à une extrémité supérieure de celle-ci, à un deuxième élément de support (29) ayant une deuxième plaque de maintien de connecteurs (30), qui porte, sur une surface de celle-ci, un certain nombre de deuxièmes connecteurs (31) et/ou de contre-connecteurs faisant face, pendant la phase de simulation, aux premiers connecteurs (26) et/ou aux contre-connecteurs ; et dans lequel la deuxième plaque de maintien de connecteurs (30) peut tourner autour des trois axes orthogonaux (X, Y, Z).

2. Système selon la revendication 1, dans lequel l'angle réel couvert par la plaque de maintien de connecteurs (30) est obtenu à partir de la composition trigonométrique de trois angles (αᵢ, ηᵢ, γ) définis avec les trois axes orthogonaux (X, Y, Z), respectivement.

3. Système selon la revendication 1 ou 2, dans lequel chaque bras (17) est obtenu au moyen d'une manivelle (18) connectée à un parallélogramme articulé respectif (19).

4. Système selon la revendication 3, dans lequel le robot delta (14) comprend un premier dispositif d'actionnement (20) pour chaque bras de connexion (17) comprenant, à son tour, un premier moteur opérationnel (21), de préférence un moteur sans balais ; chaque premier moteur (21) est connecté à la manivelle respective (18), de préférence avec l'interposition d'un premier réducteur respectif (22) .

5. Système selon la revendication 4 et comprenant des dispositifs de freinage pour bloquer chaque manivelle (18), en l'absence de puissance du premier moteur opérationnel respectif (21).

6. Système selon l'une quelconque des revendications précédentes, dans lequel ladite plate-forme (16) est mobile à l'intérieur d'un volume défini par une pluralité de surfaces sensiblement concentriques, dont la taille diminue au fur et à mesure que la distance par rapport à la base fixe (15) augmente.

7. Système selon l'une quelconque des revendications précédentes, dans lequel le deuxième ensemble (11) comprend un deuxième dispositif d'actionnement (32) défini par un deuxième moteur opérationnel (33), de préférence un moteur sans balais, qui est connecté à la deuxième plaque de maintien de connecteurs (30), de préférence avec l'interposition d'un deuxième réducteur respectif (34) ; le deuxième moteur opérationnel (33) est conçu pour amener la deuxième plaque de maintien de connecteurs (30) à effectuer une rotation autour d'un premier axe (Z).

8. Système selon la revendication 7 et comprenant un dispositif de freinage pour bloquer la deuxième plaque de maintien de connecteurs (30), en l'absence de puissance du deuxième moteur opérationnel respectif (33).

9. Système selon la revendication 7 ou 8, dans lequel la deuxième plaque de maintien de connecteurs (30) couvre, pendant la phase de simulation, des angles allant de -45° à +45° autour du premier axe (Z) .

10. Système selon la revendication 7 ou 8 ou 9, dans lequel le deuxième dispositif d'actionnement (32) est connecté à une plaque (35), qui peut tourner autour d'un deuxième axe (X) ; en particulier, ladite plaque (35) définit, avec le deuxième axe (X), un premier angle (β) allant de 0° à +45°.

11. Système selon l'une quelconque des revendications de 7 à 10, dans lequel la deuxième plaque de maintien de connecteurs (30) peut tourner autour d'un troisième axe (Y) ; en particulier, la deuxième plaque de maintien de connecteurs (30) définit, avec le troisième axe (Y), un deuxième angle allant de 0° à +11°.

12. Système selon la revendication 11, dans lequel le deuxième ensemble (11) comprend un élément de joint ou des cales en forme de feuille d'épaisseur non uniforme interposées entre la tige (28) et la plaque (35), qui permettent de verrouiller la plaque de maintien de connecteurs (30) de manière à définir, avec le troisième axe (Y), un angle donné (α).

13. Système selon l'une quelconque des revendications précédentes, dans lequel le deuxième élément de support (29) coulisse le long de la tige (28) de manière à se placer à une distance donnée du sol et comprend un élément apte à le bloquer à la hauteur souhaitée.

14. Système selon l'une quelconque des revendications précédentes, dans lequel le deuxième ensemble (11) est libre de glisser par rapport au premier ensemble (12) de manière à simuler la distance souhaitée entre deux wagons (3) successifs d'un modèle donné de rame ferroviaire (1).

15. Système selon l'une quelconque des revendications précédentes et comprenant un cadre (10) ayant une structure télescopique (27) de manière à permettre au deuxième ensemble (11) de glisser par rapport au premier ensemble (12) selon un premier axe (X) ou selon un deuxième axe (Y), orthogonal au premier axe (X).

16. Système selon l'une des revendications précédentes, dans lequel le deuxième ensemble (11) et le premier ensemble (12) sont logés dans une chambre climatique conçue pour garder la température à une valeur comprise entre -40 °C et +90 °C.

17. Système selon l'une des revendications précédentes, dans lequel chaque plaque de maintien de connecteurs (25, 30) porte jusqu'à quatre connecteurs (26, 31).

18. Système selon l'une quelconque des revendications précédentes et comprenant une unité de commande qui, pour chaque simulation, vise à définir la trajectoire de la plate-forme mobile (16) dans le volume opérationnel, à contrôler la vitesse des déplacements (c'est-à-dire les cycles opérationnels par minute), à déterminer l'amplitude initiale d'un premier angle (β) et d'un deuxième angle (α) pour bloquer le deuxième ensemble (11) afin d'établir l'amplitude d'un troisième angle (γ) parcouru au cours de la simulation.
